**Europäisches Patentamt**

**European Patent Office**

**Office européen des brevets**

(11) Veröffentlichungsnummer: **0 250 839**
**A1**

## (12) EUROPÄISCHE PATENTANMELDUNG

(21) Anmeldenummer: **87107426.6**

(22) Anmeldetag: **21.05.87**

(51) Int. Cl.4: **H02K 23/26** , **H02K 15/09** , **H02K 3/51** , **H02K 3/38**

(30) Priorität: **02.06.86 DE 8614834 U**
**21.08.86 DE 8622361 U**

(43) Veröffentlichungstag der Anmeldung:
**07.01.88 Patentblatt 88/01**

(84) Benannte Vertragsstaaten:
**DE FR SE**

(71) Anmelder: **Siemens Aktiengesellschaft Berlin und München**
**Wittelsbacherplatz 2**
**D-8000 München 2(DE)**

(72) Erfinder: **Stralka, Herbert**
**Berliner Strasse 10/12**
**D-8740 Bad Neustadt/Saale(DE)**

(54) **Läufer für eine Gleichstrommaschine.**

(57) Die Erfindung betrifft einen Läufer für eine Gleichstrommaschine mit einer in Nuten (1-30) des Läuferblechpaketes angeordneten Wicklung. Ein kompakter Wickelkopfaufbau wird dadurch erreicht, daß die Wicklung in n(p-1) Wickelgruppen unterteilt ist, wobei n der Anzahl der übereinander angeordneten Lagen und p der Polzahl des Läufers entspricht, daß alle Spulen (41-41.9;42-42.9; 43-43.9) der Wickelgruppen mit gleichgroßem Wickelschritt von annähernd N/p-Nuten jedoch kleiner 360°/p ausgeführt sind, wobei N die Gesamtnutenzahl des Läufers bedeutet, daß jeweils (p-1) Wickelgruppen in einer Lage gleichmäßig verteilt über den Umfang des Läuferblechpaketes angeordnet sind, wobei auf die jeweils den Anfang einer Wickelgruppe bildende Spule (41;42,43) folgend in jeder Wickelgruppe die weiteren Spulen (41.1-41.9; 42.1-42.9;43.1-43.9) in beliebiger, jedoch gleicher Umfangsrichtung fortschreitend in der jeweils nächsten Nut angeordnet sind.

FIG 1

EP 0 250 839 A1

## Läufer für eine Gleichstrommaschine

Die Erfindung betrifft einen Läufer für eine Gleichstrommaschine, mit einer in Nuten des Läuferblechpaketes angeordneten Wicklung.

Durch die US-A-18 07 252 ist ein solcher bewickelter Läufer einer elektrischen Maschine bekannt. Beim Bewickeln dieses Läufers werden alle Nuten des Läuferblechpaketes gleichzeitig bewickelt. Hierdurch wird ein sehr gleichmäßiger Aufbau des Wicklungskopfes erreicht, so daß kaum Unwuchten auftreten. Nachteilig sind dabei jedoch die vielen Kreuzungen der einzelnen Wicklungsdrähte an den Wicklungsstirnköpfen.

Es hat sich gezeigt, daß es infolge der vielen Kreuzungen der Wicklungsdrähte insbesondere bei Maschinen die im Reversierbetrieb arbeiten häufig zu Windungsschlüssen kommt, da durch die beim Reversieren auftretenden hohen Kräfte die Wicklungsdrähte gegeneinander reiben und somit die Isolierung im Laufe der Zeit beschädigt wird.

Der Erfindung liegt die Aufgabe zugrunde, die Wicklung des Läufers einer Gleichstrommaschine so zu gestalten, daß ein kompakter Aufbau der Wicklungsköpfe bei weniger Kreuzungen der einzelnen Wicklungsdrähte erreicht wird.

Die Lösung der gestellten Aufgabe gelingt nach der Erfindung dadurch, daß die Wicklung in n (p-1) Wickelgruppen unterteilt ist, wobei n der Anzahl der übereinander angeordneten Lagen der Wicklung und p der Polzahl des Läufers entspricht, daß alle Spulen der Wickelgruppen mit gleichgroßem Wickelschritt von annähernd N/p-Nuten jedoch kleiner 360°/p ausgeführt sind, wobei N die Gesamtnutenzahl des Läufers bedeutet und daß jeweils (p-1) Wickelgruppen in einer Lage gleichmäßig verteilt über den Umfang des Läuferblechpaketes angeordnet sind, wobei auf die jeweils den Anfang einer Wickelgruppe bildende Spule folgend in jeder Wickelgruppe die weiteren Spulen in beliebiger, jedoch gleicher Umfangsrichtung fortschreitend in der jeweils nächsten Nut angeordnet sind.

Eine Fixierung der einzelnen Spulen in den Nuten des Läuferblechpaketes während der Bewicklung des Läuferblechpaketes wird nach einer Ausgestaltung der Erfindung dadurch erreicht, daß am Außenumfang der beiden Wickelköpfe der ersten Spule der ersten Wickelgruppe jeweils ein mit seinem freien Ende an der Welle des Läufers oder am Wickelkopf selbst befestigtes Halteband aufgelegt und fortlaufend auf die Wickelköpfe der nach und nach eingelegten Spulen aufgewickelt ist. Hierdurch werden die Spulen nach dem eigentlichen Wickelvorgang in den Nuten fixiert, wodurch das Einbringen der weiteren Spulen erleichtert wird.

Gleichzeitig läßt sich eine Erhöhung der elektrischen Sicherheit dadurch erreichen, daß das Halteband aus elektrisch isolierendem Material besteht und sich über die volle axiale Breite des Wickelkopfes erstreckt. Die einzelnen Spulen werden durch das Halteband somit im gesamten Wickelkopfbereich nochmals zusätzlich gegeneinander isoliert.

Anhand eines in der Zeichnung dargestellten Ausführungsbeispieles wird der Anmeldungsgegenstand nachfolgend näher beschrieben:

Die Fig. 1 bis 5 zeigen jeweils einen Läufer in Stirnansicht mit einer zunehmenden Anzahl von in die Nuten des Läuferblechpaketes eingewickelten Spulen.

Fig. 6 zeigt einen Läufer in Stirnansicht, bei dem jeweils eine Spule einer Wickelgruppe in die entsprechenden Nuten eingewickelt und am Wicklungskopf ein Halteband aufgewickelt ist.

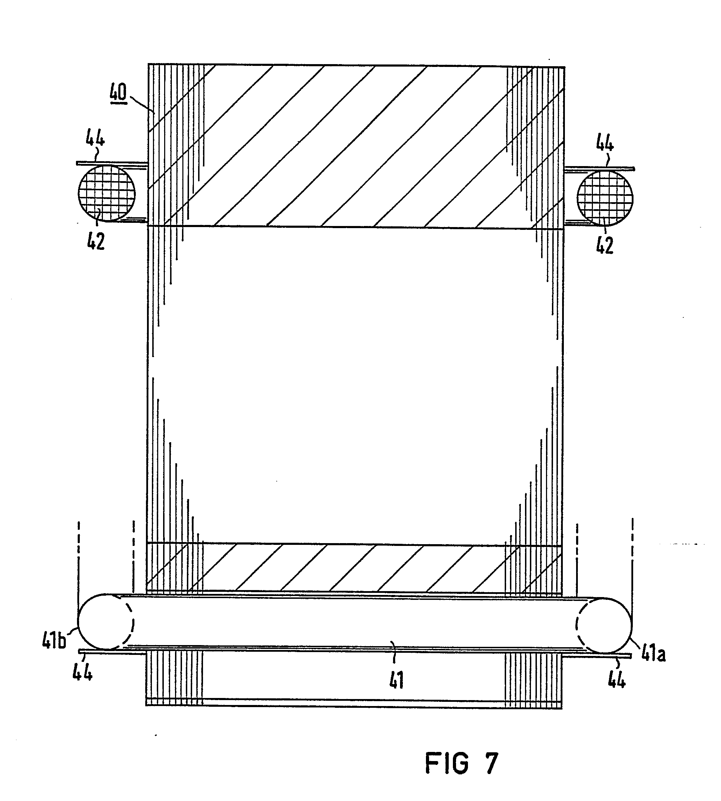

Fig. 7 zeigt einen Läufer im Schnitt entlang der Linie II-II in Fig. 6.

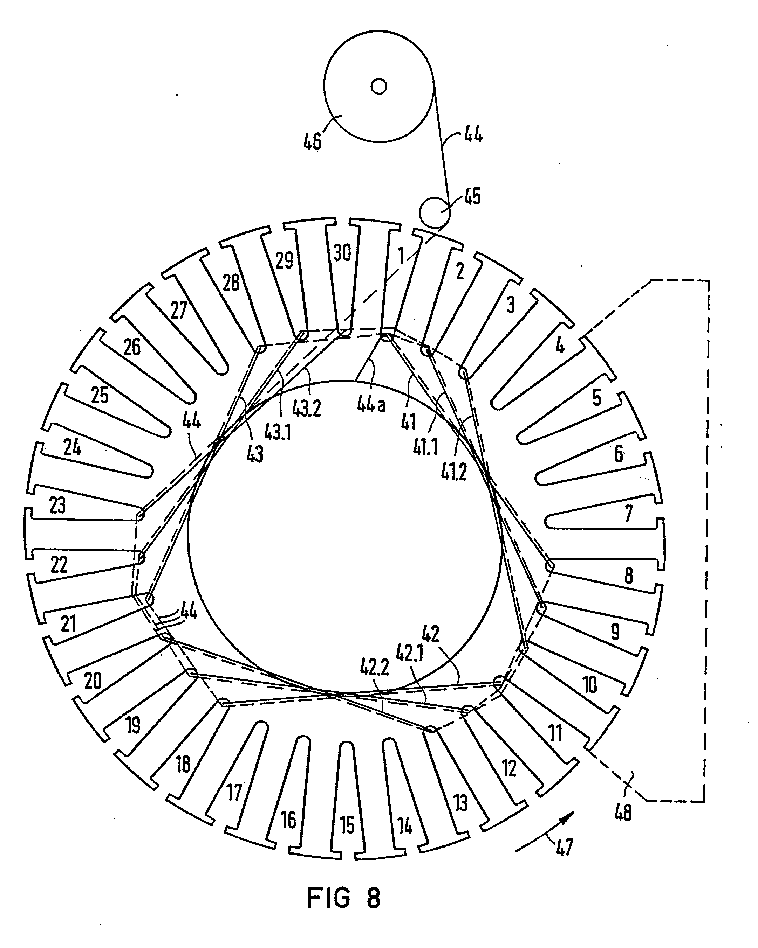

Fig. 8 zeigt einen Läufer in Stirnansicht, bei dem bereits jeweils drei Spulen von jeder Wickelgruppe unter Zwischenfügung eines Haltebandes am Wicklungskopf gewickelt sind.

Mit 40 ist das Blechpaket eines 4-poligen Läufers bezeichnet, der Nuten 1 bis 30 aufweist. Für die einzelnen Spulen 41, 42 und 43 beträgt der Wickelschritt sieben Nuten. Dieser Wickelschritt ergibt sich dadurch, daß der Wickelschritt jeweils angenähert N/p und kleiner als 360°/p sein soll. Da im vorliegenden Ausführungsbeispiel der Quotient von N/p = 30/4 = 7,5 ist, wird infolge der weiteren Bedingung, daß der Wickelschritt kleiner 360°/p = 90° sein soll, der Wickelschritt für die Spulen mit sieben Nuten gewählt.

Die Anzahl der Wickelgruppen ergibt sich aus der Differenz von p-1. Bei dem vorliegenden Ausführungsbeispiel ist somit die Anzahl der Wickelgruppen gleich (4-1) somit also 3.

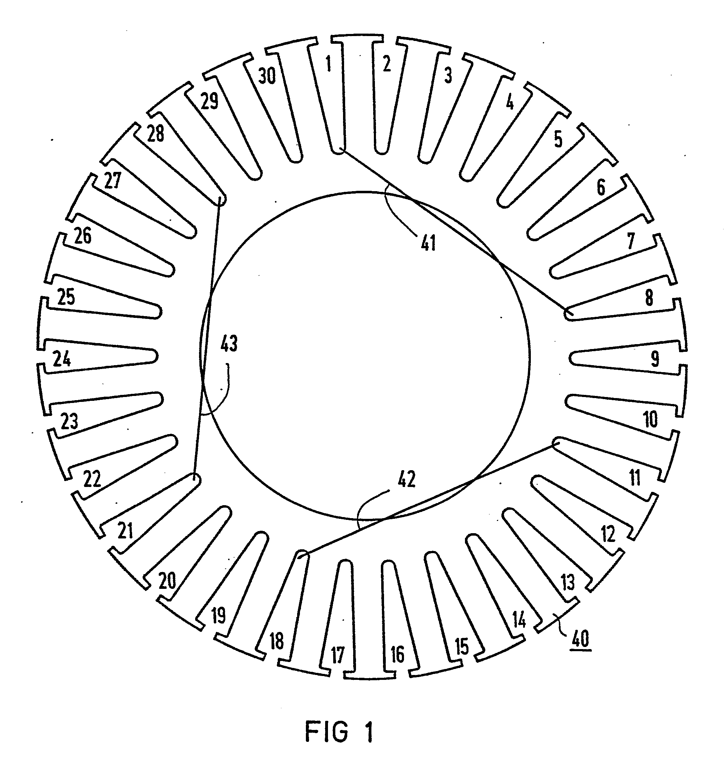

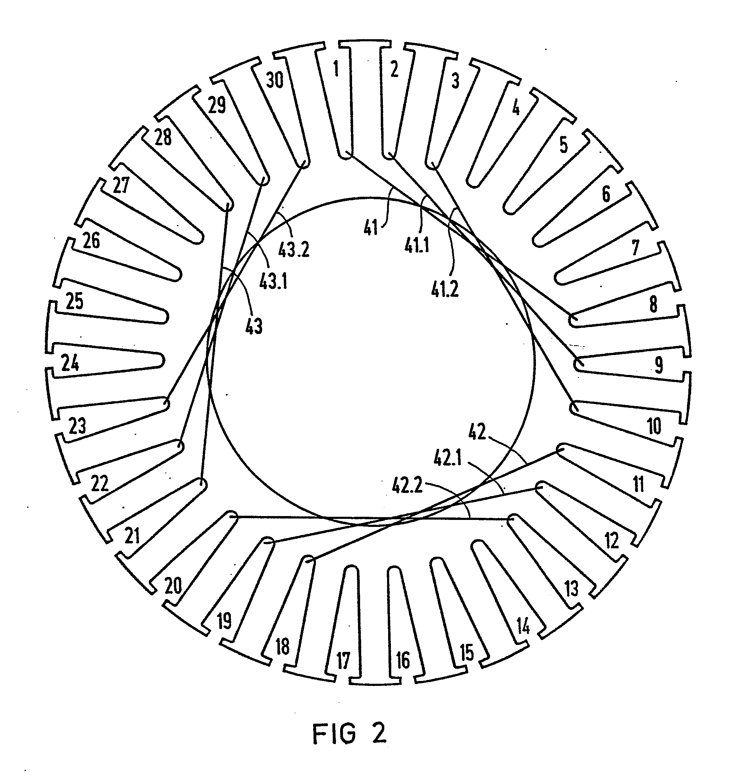

Wie die Fig. 1 zeigt, sind die jeweils den Anfang der drei Wickelgruppen bildenden Spulen 41, 42 und 43 mit dem Wickelschritt von sieben Nuten gleichmäßig über den Umfang des Läuferblechpaketes verteilt. Da der Läufer 30 Nuten aufweist und die Wicklung aus drei Wickelgruppen aufgebaut wird, beginnt jeweils nach 10 Nuten eine neue Wickelgruppe. Eine Wickelgruppe umfaßt somit 10 Nuten. Die erste Spule 41 der ersten Wickelgruppe belegt die Nuten 1 und 8, die erste Spule 42 der zweiten Wickelgruppe die Nuten 11 und 18 und die erste Spule 43 der dritten Wickelgruppe die Nuten 21 und 28. Die Wicklung ist so aufgebaut, daß die nächsten Spulen jeder Wickelgruppe fortschreitend in der jeweils nächsten Nut angeordnet sind, wobei die einmal gewählte Umfangsrichtung beibehalten wird. Somit sind die nächsten Spulen 41.1, 41.2 der ersten Wicklungsgruppe in die Nuten 2 und 9 bzw. 3 und 10, die nächsten Spulen 42.1, 42.2 der zweiten Wicklungsgruppe in die Nuten 12 und 19 bzw. 13 und 20 und die nächsten Spulen 43.1, 43.2 der dritten Wicklungsgruppe in die Nuten 22 und 29 bzw. 23 und 30 eingebracht, wie dies die Fig. 2 zeigt.

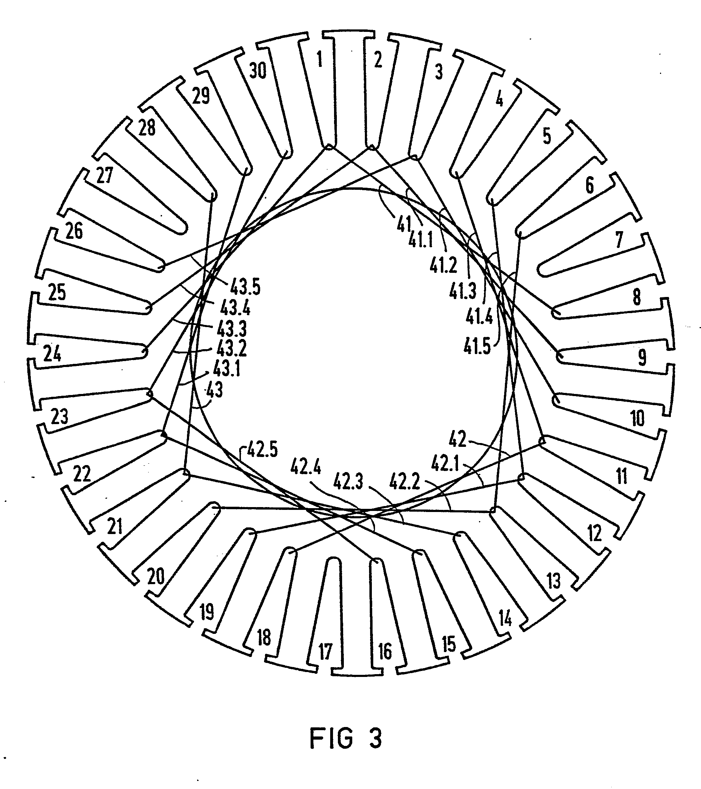

Bei dem in Fig. 3 dargestellten weiteren Aufbauschritt der Wicklung sind dann weitere Nuten durch die Spulen der einzelnen Wickelgruppen belegt. Die zu der ersten Wickelgruppe gehörenden Spulen 41.3 - 41.5 belegen die Nuten 4 und 11; 5 und 12 sowie 6 und 13, die zur zweiten Wickelgruppe gehörenden Spulen 42.3 - 42.5 die Nuten 14 und 21; 15 und 22 sowie 16 und 23, die zur dritten Wickelgruppe gehörenden Spulen 43.3 - 43.5 die Nuten 24 und 1; 25 und 2 sowie 26 und 3.

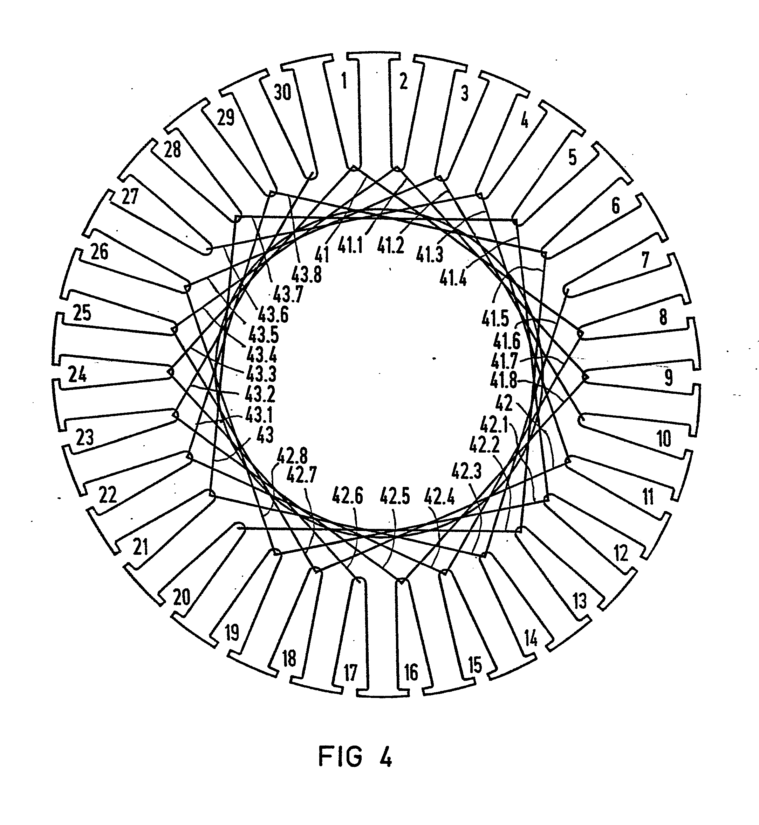

Die Fig. 4 zeigt die weitere Belegung der Nuten durch die Spulen der einzelnen Wicklungsgruppen. Durch die Spulen 41.6 - 41.8 der ersten Wicklungsgruppe sind nunmehr die Nuten 7 und 14; 8 und 15 sowie 9 und 16, durch die Spulen 42.6 - 42.8 der zweiten Wicklungsgruppe die Nuten 17 und 24; 18 und 25 sowie 19 und 26 und durch die Spulen 43.6 - 43.8 der dritten Wicklungsgruppe der Nuten 27 und 4; 28 und 5 sowie 29 und 6 belegt.

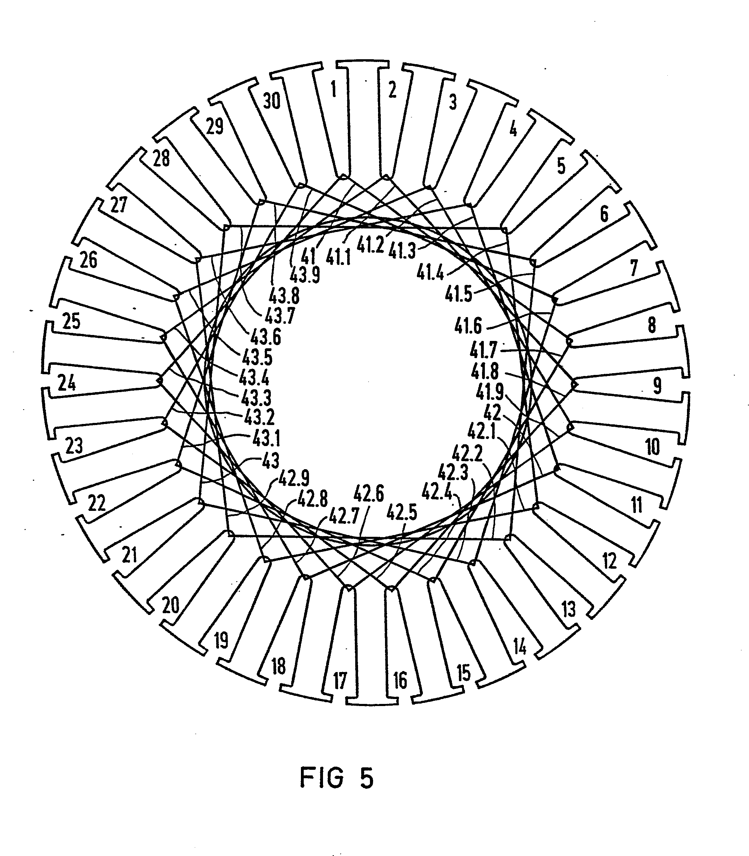

Bei der Darstellung nach Fig. 5 sind dann noch die Nuten 10 und 17 durch eine Spule 41.9 der ersten Wicklungsgruppe, die Nuten 20 und 27 durch eine Spule 42.9 der zweiten Wicklungsgruppe und die Nuten 30 und 7 durch eine Spule 43.9 der dritten Wicklungsgruppe belegt.

Diese Art der Wicklungsausführung ergibt einen vollkommen gleichmäßigen Wickelkopf, der sich ferner durch einen kompakten Aufbau und eine kurze Länge auszeichnet. Ferner wird bei einer solchen Ausführungsform keine Nut durch die bereits eingebrachten Spulen verdeckt, so daß die nachfolgenden Spulen ohne Behinderung gewickelt werden können.

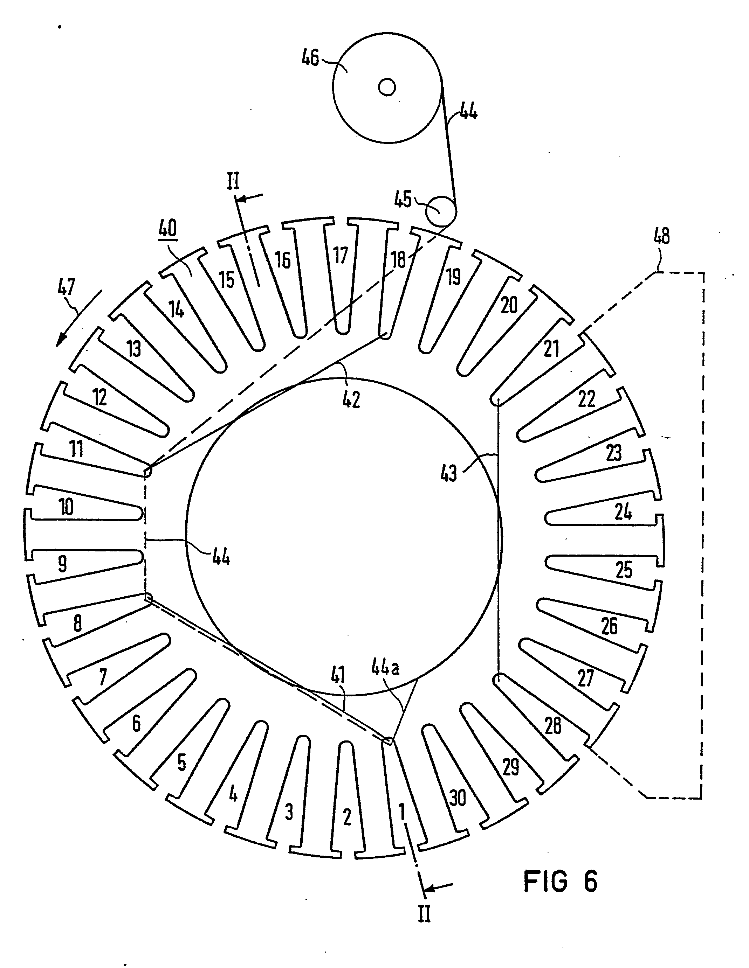

Beim Bewickeln des mit Nuten 1 bis 30 versehenen Läuferblechpaketes 40 wird zunächst mit Hilfe eines gestrichelt dargestellten Wickelschuhes 48 eine Spule einer Wickelgruppe z.B. die Spule 41 in die entsprechenden Nuten 1 und 8 gewickelt (Fig.6). Sind alle Windungen dieser Spule 41 in die Nuten 1 und 8 eingebracht, wird das Läuferblechpaket um ca. 120° in Richtung des Pfeiles 47 gedreht, so daß nunmehr die nächste Spule 42 in die Nuten 11 und 18 gewickelt werden kann. Ist die Spule 42 fertig gewickelt, wird das Läuferblechpaket wiederum um ca. 120° weitergedreht und dann die nächste Spule 43 in die Nuten 21 und 28 eingebracht.

Damit die Windungen der zuvor gewickelten Spulen 41 und nicht wieder auffächern, wird am Außenumfang der beiden Wickelköpfe 41a und 41b jeweils ein Halteband 44 aufgelegt (Fig. 2). Hierzu wird das freie Ende 44a des Haltebandes 44 entweder an dem betreffenden Wickelkopf 41a bzw. 41b direkt oder an der Welle des Läufers befestigt. Über eine Spannrolle 45 läuft das Halteband 44 von einer Vorratsrolle 46 ab. Durch die Spannrolle 45 wird das Halteband 44 so geführt, daß es sich beim Weiterdrehen des Läuferblechpaketes in der durch den Pfeil 47 gekennzeichneten Richtung auf den Wickelkopf der jeweils zuvor gewickelten Spule 41 bzw. 42 auflegt. Durch die Spannrolle 45 wird das Halteband 44 außerdem so geführt, daß es auf die betreffende Spule eine zum Nutgrund gerichtete Kraft ausübt. Somit werden die Windungen der Spule zusammengehalten und die Spule wird insgesamt in die Nut gedrückt.

In Fig. 3 ist die Anordnung des Haltebands 44 nach dem Einbringen von jeweils drei Spulen 41 bis 41.2 bzw. 42 bis 42.2 bzw. 43 bis 43.3 jeder Wickelgruppe dargestellt. Wie diese Darstellung zeigt, legt sich das einmal an der zuerst eingelegten Spule 41 befestigte Halteband 44 beim Weiterdrehen des Läuferblechpaketes 40 in der durch den Pfeil gekennzeichneten Richtung nach und nach auf die Wickelköpfe der einzelnen Spulen auf, so daß es in einer fortlaufenden Spirale auf die Wickelköpfe aufgewickelt wird.

Vorteilhaft ist es wenn das Halteband aus einem elektrisch isolierendem Material z.B. aus Textil- oder Kunststoff-Fasern besteht, da dann durch das Halteband 44 eine zusätzliche elektrische Isolierung der Wickelköpfe 41a bzw. 41b der einzelnen Spulen erreicht wird.

Die Läuferwicklung kann ferner aus mehreren Lagen solcher übereinanderliegenden Wickelgruppen bestehen. Die beschriebene Anordnung der Wickelgruppen wird dann in jeder Lage wiederholt. Entsprechend der Anzahl n der übereinander angeordneten Lagen, ergibt sich eine größere Anzahl von Wickelgruppen, wobei jede Lage von (p-1) Wickelgruppen gebildet wird.

Auch die Wicklungsanschlüsse zum Kommutator, liegen bei einer solchen Wicklung dicht beieinander. Besteht die komplette Läuferwicklung aus mehreren Lagen, dann kann nach jeder vollständigen Lage eine Bandage um die zum Kommutator führenden Wicklungsanschlüsse angebracht und damit eine hohe Sicherheit in Bezug auf Fliehkraftbeanspruchung erreicht werden.

**Ansprüche**

1) Läufer für eine Gleichstrommaschine, mit einer in Nuten des Läuferblechpaketes angeordneten Wicklung,
**dadurch gekennzeichnet,**
daß die Wicklung in n(p-1) Wickelgruppen unterteilt ist, wobei n der Anzahl der übereinander angeordneten Lagen der Wicklung und p der Polzahl des Läufers entspricht, daß alle Spulen (41, 42, 43) der Wickelgruppen mit gleichgroßem Wickelschritt von annähernd N/p-Nuten jedoch kleiner 360°/p ausgeführt sind, wobei N die Gesamtnutenzahl des Läufers bedeutet und daß jeweils (p-1) Wickelgruppen in einer Lage gleichmäßig verteilt über den Umfang des Läuferblechpaketes angeordnet sind, wobei auf die jeweils den Anfang einer Wickelgruppe bildende Spule (41 bzw. 42 bzw. 43) folgend in jeder Wickelgruppe die weiteren Spulen (41.1 - 41.9 bzw. 42.1 - 42.9 bzw. 43.1 - 43.9) in beliebiger, jedoch gleicher Umfangsrichtung fortschreitend in der jeweils nächsten Nut angeordnet sind.

2) Läufer nach Anspruch 1,
**dadurch gekennzeichnet,**
daß am Außenumfang der beiden Wickelköpfe (41a, 41b) der ersten Spule (41) der ersten Wickelgruppe jeweils ein mit seinem freien Ende (44a) an der Welle des Läufers oder am Wickelkopf (41a bzw. 41b) selbst befestigtes Halteband (44) aufgelegt und fortlaufend auf die Wickelköpfe (41a und 41b) der nach und nach eingelegten Spulen (41, 42, 43) aufgewickelt ist.

3) Läufer nach Anspruch 2,
**dadurch gekennzeichnet,**
daß das freie Ende (44a) des Haltebandes (44) durch Kleben befestigt ist.

4) Läufer nach Anspruch 2 oder 3,
**dadurch gekennzeichnet,**
daß das Halteband (44) aus elektrisch isolierendem Material besteht und sich über die volle axiale Breite des Wickelkopfes (41a bzw. 41b) erstreckt.

FIG 1

86 P 3191 E

FIG 2

86 P 3191 E

FIG 3

86 P 3191 E

FIG 4

86 P 3191 E

FIG 5

86 P 3191 E

FIG 6

86 P 3191 E

FIG 7

86 P 3191 E

FIG 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,Y | US-A-1 807 252 (QUACKENBUSH) <br> * Seite 1, Zeile 23 - Seite 2, Zeile 61; Figuren 1-11 * <br> --- | 1 | H 02 K 23/26 <br> H 02 K 15/09 <br> H 02 K 3/51 <br> H 02 K 3/38 |
| Y | DE-A-2 846 357 (SECOH GIKEN) <br> * Seite 11, Zeile 26 - Seite 13, Zeile 12; Figuren 2,5A,5B,6 * <br> --- | 1 | |
| A | US-A-2 627 379 (MOORE) <br> * Figuren 4-6 * <br> --- | 1 | |
| A | FR-A- 403 519 (THIEBAUT) <br> * Seite 1, Zeile 59 - Seite 2, Zeile 1; Figur 2 * <br> --- | 1 | |
| A | US-A-1 628 613 (POWELL) <br> * Seite 2, Zeilen 11-49; Figur * <br> --- | 1 | **RECHERCHIERTE SACHGEBIETE (Int. Cl. ³)** |
| A | US-A-1 644 718 (FITZGERALD) <br> * Seite 1, Zeile 67 - Seite 2, Zeile 3; Figuren 1-5 * <br> --- | 2-4 | H 02 K |
| A | US-A-3 365 600 (PENN) <br> * Spalte 5, Zeilen 18-33; Figuren 1,2 * <br> ----- | 2-4 | |

Der vorliegende Recherchenbericht wurde für alle Patentansprüche erstellt.

| Recherchenort | Abschlußdatum der Recherche | Prüfer |
|---|---|---|
| DEN HAAG | 10-09-1987 | TIO K.H. |